# EUROPEAN PATENT APPLICATION

(11) **EP 2 106 690 A2**
(43) Date of publication of application: **07.10.2009**
(21) Application number: 09157049.9
(22) Date of filing: 01.04.2009
(51) Int. Cl.: A01G 23/081

(54) **Arrangement and method for handling tree trunks, feed roller for the arrangement, and timber harvesting device equipped with the arrangement**

(30) Priority: 01.04.2008 FI 20085270
(71) Applicant: Moisio Forest OY, 44670 Suovanlahti (FI)
(72) Inventor: Moisio, Juha, 44670, Suovanlahti (FI)
(74) Representative: Helke, Kimmo Kalervo

(57) **Abstract**

The invention relates to an arrangement for handling tree trunks, which includes a holding-element arrangement (15, 16, 31.1, 31.2). The holding-element arrangement (15, 16, 31.1, 31.2) is arranged to form a functional throat (30), of which
- the feed side (33) is arranged to be smooth, in such a way that a tree trunk (22') pressed against is arranged to be guided into the throat (30),
- the compressive force is arranged to permit the trunk (22') to enter the throat (30). In addition, the invention also relates to a method for handling tree trunks, a feed roller (31.1, 31.2) for the arrangement, and a timber harvesting device equipped with the arrangement.

## Description

The present invention relates to an arrangement for handling tree trunks, which includes a holding-element arrangement. In addition, the invention also relates to a feed roller for the arrangement, a timber harvesting device equipped with the arrangement, and a method for handling tree trunks.

Various types of device solutions, for example, for collecting energy timber, are known from the prior art. Some examples are, PCT application publications WO - 90/01867 A1 and WO - 2005/099438 A1 and EP patent application number EP - 1121851 A2. In a collecting energy-timber grab, there is a holding-element arrangement, in which several tree trunks can be collected in bundles, moving at intervals from one trunk to the next. Harvesters, in which there is not only a collecting property, but also a feed device and stripping blades, are known technology. In addition to felling, a tree or a group of trees collected in the holding-element arrangement can then be stripped and cut into lengths of a desired dimension.

In the aforementioned solutions, the operator must direct control operations to the holding-element arrangement, for example, to open and close it. This control is performed by the operator using the control devices of the work machine. Alternatively, a timber harvester can be equipped with a computer, for control of the holding-element arrangement, so that, for example, the collection of energy-timber bundles would take place as smooth as possible. A collection solution that demands a great deal of operator interaction makes collection monotonous and extremely uncomfortable. Correspondingly, a computer-based collection solution makes the collection device unreasonable expensive.

If the device additionally includes feed and stripping functions, there must be elements for performing the operations in question. This complicates the mechanical construction of the device and the implementation of the operating devices.

The present invention is intended to create an arrangement with a simple operating principle and construction for the handling of tree trunks, and a corresponding method. In addition, the invention relates to a feed roller for the arrangement and a timber harvester equipped with the arrangement. The characteristic features of the arrangement according to the invention are stated in Claim 1, those of the timber-collecting device in Claim 12, those of the feed roller in Claim 13, and those of the method in Claim 14.

The use of the invention achieves advantages in many ways. Firstly, the technical implementation of the arrangement is extremely simple and operationally reliable in its mechanics and in the implementation of its operating devices. The gathering of tree trunks into connection with the device can even take place mostly automatically, without significant operator interaction, or computer-controlled operation. The solution appreciably facilitates the mass collection of energy timber, for example.

Several functions can be arranged in the arrangement. Thus, the handling of tree trunks can be understood very widely in the context of the invention. According to one embodiment, handling can be, for example, the collection of trunks, more generally the gathering of one or more trunks into the arrangement. Besides, or instead of collection, the arrangement can also be used to perform the stripping of the trunks, which can also be understood as one example of handling. In the embodiment including stripping, one structural totality can be used to take care both of collection and of the trunk feed associated with stripping. In addition to the fact that utilizing the same structural totality for two functionalities makes the arrangement simple, it also lightens the mass of the device. The other features specific to the invention will become apparent from the Claims while other advantages achieved by the invention are stated in greater detail in the description portion.

The invention, which is in no way restricted to the embodiments described in the following, is examined in greater detail with reference to the accompanying drawings, in which
- Figure 1: shows one example of the frame of the arrangement;
- Figure 2: shows an example of the grab elements with operating devices;
- Figures 3: shows a first embodiment of the holding elements forming a throat, together with operating devices;
- Figure 4a: shows a first embodiment of an arrangement, in which the grab and holding elements shown in Figures 2 and 3 are pivoted to the frame of Figure 1;
- Figure 4b: shows a timber-harvesting device based on the embodiment of Figure 4a, seen at an angle from the front;
- Figures 5a and 5b: show some alternative embodiments of the holding elements forming the throat, equipped with also a feed functionality;
- Figure 6a: shows a second embodiment of the arrangement, equipped with holding elements according to Figure 5a;
- Figure 6b: shows a timber-harvesting device based on the embodiment of Figure 6a, seen at an angle from the front;
- Figures 7 - 12: show the operation in stages of the arrangement shown in Figure 4a;
- Figures 13 - 16: show the operation in stages of the arrangement shown in Figure 6a; and
- Figures 17a and 17b: show a third embodiment of the holding-element arrangement forming the throat.

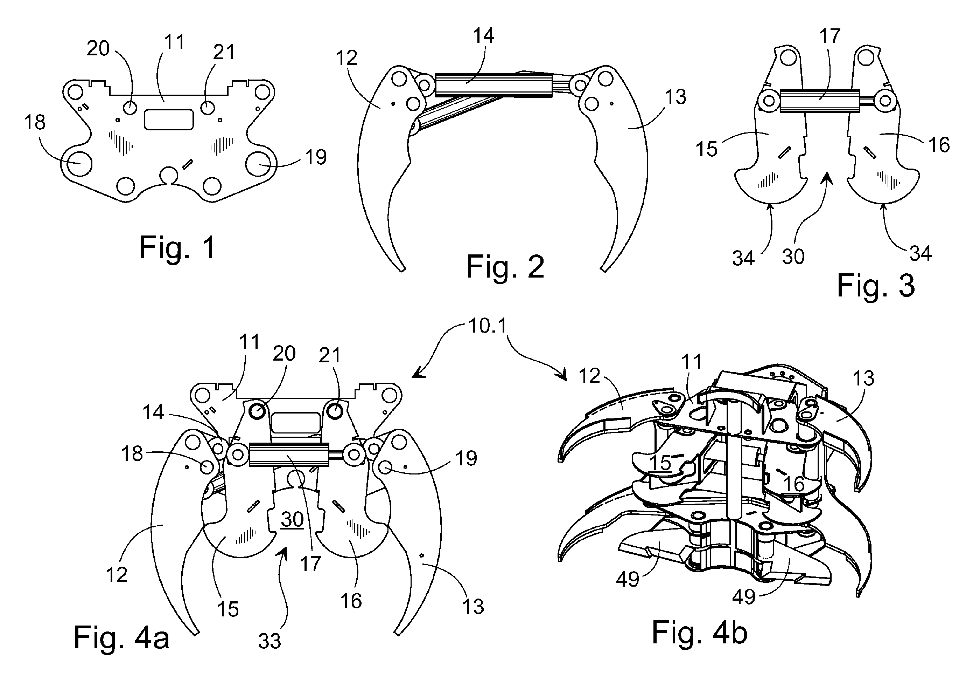

Figure 1 shows a top view of one example of the frame structure 11 of the arrangement 10.1. In the frame structure 11, there are symmetrical attachment points 20, 21, 18, 19, for pivoting the holding-element arrangement and a possible collector-grab arrangement to the frame 11.

Figure 2 shows an embodiment of elements, which can also be referred to as loader jaws 12, 13, forming a grab arrangement acting as a loader. In addition to the loading functionality, there can also be a stripping functionality in the jaws 12, 13. In that case, there will be a stripping-blade functionality in their opposing edges. A medium-operated operating device, such as a hydraulic cylinder 14, is fitted between the jaws 12, 13. By means of it, the opposing jaws 12, 13 can be rotated and thus the grab closed and opened.

Figure 3 shows a first embodiment of the holding-element arrangement 15, 16. The holding-elements 15, 16 are arranged to form a functional throat 30 between them. The throat 30 can be used to hold one or more tree trunks in connection with the arrangement. In the case of several trunks, it is also possible to refer to a collector throat 30. The collector throat 30 is now formed by the opposing jaws 15, 16, which form a pincer-like arrangement. A medium-operated operating device, for example a hydraulic cylinder 17, is also fitted between the collector jaws 15, 16. By this means, the jaws 15, 16 can be moved relative to each other, to open or close the throat 30. In addition, the hydraulic cylinder 17 permits the size of the throat 30 to be changed as the collection of trunks progresses.

Figure 4a shows a first embodiment of the arrangement 10.1 for handling tree trunks, which in this case can be the collection of one or more trunks. A throat 30, for holding one or more trunks together in a controlled manner, for example as a bundle, is pivoted to the frame structure 11 of the arrangement 10.1. In addition, a grab arrangement 12, 13, for collecting the trunks in the throat 30, is also pivoted to the frame structure 11. By pivoting the throat 30 and the grab arrangement 12, 13 to the same frame structure 11, the arrangement 10.1 is made into a compact and stiff structural package.

The grab arrangement is formed by loading and /or collector jaws 12, 13 pivoted to attachment point 18, 19 in the frame structure 11, which are shown, in, for example, Figures 2. By means of the grab 12, 13, trunks can be collected from a wide area, by taking them to the throat 30.

In this case, the throat 30 is formed by the collector jaws 15, 16, an example of which was shown in Figure 3, pivoted rotatably to attachment points 20, 21 in the frame structure 11. The throat 30 has a feed side 33, from which direction the trunks are fed into the throat 30, i.e. between the jaws 15, 16. On the other hand, the trunks can also leave the throat 30 from this feed side 33. Relative to the pivot points 20, 21, the feed side 33 is at the opposite end of the elements 15, 16 forming the functional throat 30. The loading/stripping blades, i.e. grab arrangement 12, 13, pivoted to the extreme edges of the frame structure 11, are controlled by a compression cylinder 14 while the collector jaws 15, 16 forming the throat 30 fitted between the grab elements 12, 13 are controlled by a compression cylinder 17. The effective grab reach of the elements 12, 13 forming the grab arrangement can be, for example, 300 - 800 mm, or even greater.

As can be clearly seen from Figures 3 and 4a, the feed side 33 of the throat 30 is arranged to have a smooth shape. More particularly, the end 34 of the feed side 33 of the jaws 15, 16 forming the throat 30 is equipped with a smoothly shaped structure guiding the trunks towards the throat 30. By means of the smooth shape, trunks pressed against the throat 30, and more particularly its feed side 33 are arranged to be guided into the throat 30 and to open it. The trunks can be pressed against the throat 30 by means of the grab 12, 13, for example. Of course, the trunks can also be pressed into the throat 30, for example, by means of a movement directed through, or created by the rotation of the boom of the work machine. In that case, the arrangement 10.1 together with its frame structures 11 are pressed against the trunk intended to be collected in the throat 30.

In addition, the compressive force of the throat 30 is intended to permit the trunks to enter the throat 30. However, the compressive force of the throat 30 must also be sufficient for the trunks collected inside to remain in the throat 30. This is also assisted by the holding formation in the opposing edges of the pincers 15, 16, as well as by the hook shape arranged in the jaws 15, 16 at the mouth of the throat 30. According to one embodiment, the compressive force of the throat 30 is arranged to permit the trunks to enter the throat 30 by means of the compressive force created by the grab 12, 13. The smooth shape of the feed side 33 of the throat that runs into the throat 30 and the intelligently set compressive force permit a trunk to be collected into the throat 30, without substantial operating control having to be directed to the elements 15, 16 forming the throat 30 and to their operating device 17.

Figure 4b shows an angled front view of a timber-harvesting device based on the embodiment of Figure 4a. In this case, there are two claws on top of each other on both sides of the frame 11 in the grab arrangement 12, 13 shown in a trunk-collecting position, which are at a distance from each other in the vertical direction of the arrangement 10.1 and between which a clamshell grab arrangement is formed. The collector-jaw arrangement 15, 16 too, forming the throat 30, can also have a vertical dimension, as shown in the figure. The figure also shows an example of a cutting device, which, in this case, is based on guillotine blades 49 moving against each other.

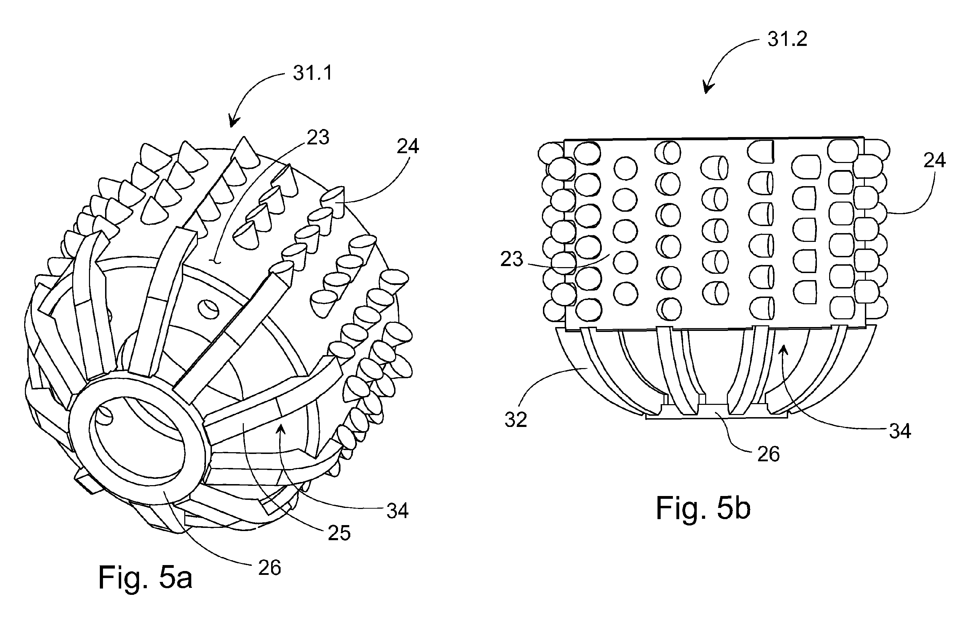

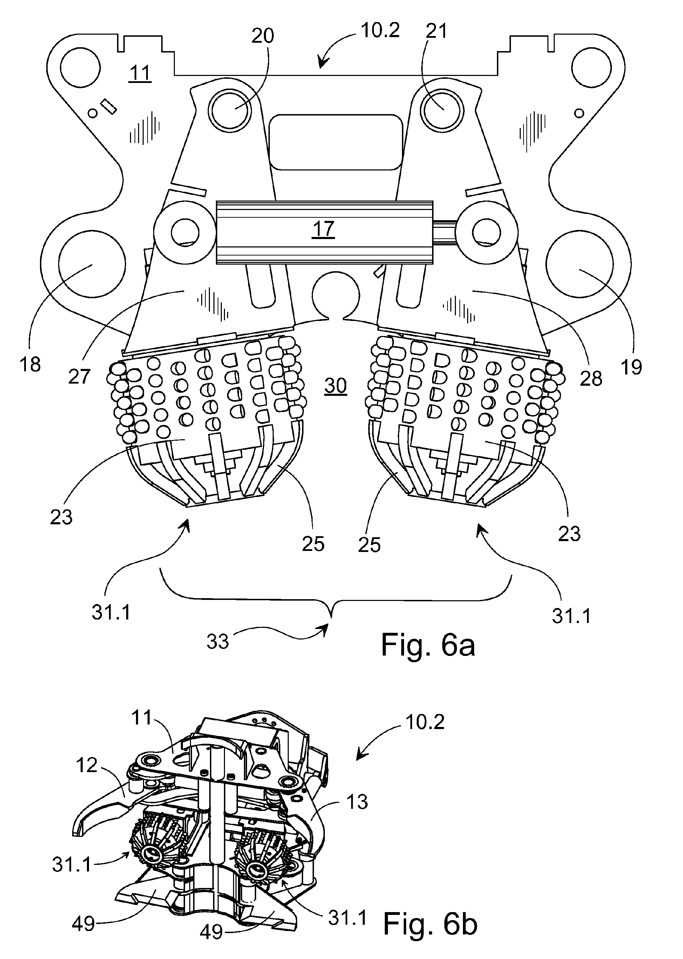

Figures 5a and 5b show some alternative embodiments of the holding elements 31.1, 31.2, by means of which a throat 30 can be formed. In this case, the holding element is formed surprisingly by an, as such, known type of timber-feed roller 31.1, 31.2, which is modified according to the basic principle of the invention. Correspondingly, Figures 6a and 6b show a second embodiment of the arrangement 10.2 equipped with collection elements 31.1, according to Fig. 5a, in which the throat 30 is arranged to be formed of a feed roller 31.1.

The basic form of the feed roller 31.1, 31.2 according to the application example shown in Figures 5a and 5b is constructed from, for example, a rim tube 23 and spikes 24 arranged on its jacket surface. Now the ends 34 of the feed-side 22 of the tree-feed roller 31.1, 31.2 are equipped with a smooth curved shaped structure 25, 32 guiding the trunks towards the throat 30. According to one embodiment, the shaped structure fitted to the end 34 of the feed roller 31.1 is conical according to Figure 5a, or a mainly spherical guide structure 25, 32 of the feed roller 31.2 of Figure 5b. Due to the smoothness of its guide shaping, the spherical bevelled surfaces 32 according to Figure 5b may be preferable to the mainly straight bevelled elements 25 with a specific bevel angle joining the based shape of the feed roller 31.1 according to Figure 5a.

One way to implement the shape structure is to fit slider rails 25, 32 to the feed side of the roller 31.1, 31.2, which make the ends of the rollers 31.1, 31.2 connect smoothly with the base diameter of the roller 31.1, 31.2. The feed roller 31.1, 31.2 is equipped with an annular support hub 26, smaller than the basic diameter, protruding axially from the feed-side 33 end 34 of the throat 30. The guide structure formed from the slider rails 25. 32 supported on the support hub 26 is arranged to expand smoothly towards the rim tube 23 of the feed roller 31.1, 31.2. In both embodiments, the elements 25, 32 of the guide structures are joined to spike rows fitted to the rim tube 23. Thus, a feed roller suitable for collecting trees is made from the roller 31.1, 31.2.

Figures 6a and 6b show a second embodiment of the grab arrangement 10.2., which includes a feed device, formed of feed rollers 31.1 for creating a relative movement between one or more trees in the longitudinal direction of the tree, and stripping blades 12, 13 for stripping the tree, in order to create a harvester grab. The collector-jaw pair, i.e. the throat 30 is now surprisingly formed of two tree-feed rollers 31.1 that are, as such, known, which are modified according to the basic principles of the invention. In this case, a collector roller 31.1 according to Figure 5a is applied.

The collector rollers 31.1 are attached to support arms 27, 28 for the rollers 31.1. The support arms 27, 28 are pivoted to the frame structure 11 at its attachment points 20, 21. The feed rollers 31.1 are in a V-shaped arrangement relative to the feed side 33, thus forming a throat 30 between them. The support arm 27, 28 is controlled by a compression cylinder 17, in a corresponding manner to that in the previous embodiment. Of course, the suspension of the collection rollers 31.1 can be implemented in some other way. The significant advantage of this embodiment is that the collection and feed property is integrated in the same device, namely in the timber-feed device formed from the roller 31.1. Thus, the tree trunks can be collected between the rollers 31.1. Because the arrangement does not need separate collector jaws, the solution lightens the total mass of the arrangement.

Figure 6b shows the tree-handling device as a tree-harvester device seen from an angle from in front, which includes a collector arrangement 10.2 equipped with a feed property. By rotating the grab jaws 12, 13, the trees are compressed between the throat 30 formed by the rollers 31.1 and the frame 11. The roller 31.1 also act are a feed device. The frame 11 can be attached to the boom of the a work machine (not shown). The tree-handling grab 12, 13 can be used not only for loading, but also to grip a standing tree. In the tree-handling grab in Figure 6b, there are two grabs 12, 13 and a cutting device formed of blades 49. Thus, the tree handling grab in question can be used to load, collect, and feed, more generally to handle tree trunks.

As can be seen from Figures 1, 4a, and 6a, the elements 15, 16, 31.1 forming the throat 30 are rotatably pivoted to pivot points 20, 21 arranged in the frame structure 11 and connected to each other by means of a first hydraulic operating device 17, which can be between the functional throat 30 and the pivot points 20, 21. Correspondingly, the elements 12, 13 forming the grab are rotatably pivoted to pivot points 18, 19 arranged in the frame structure 11 and connected to each other by means of a second hydraulic operating device 17, which is fitted to the grab behind their pivot point 18, 19. By means of such an arrangement, a favourable force arrangement in terms of both the collector throat 30 and also the grab arrangement 12, 13 is achieved, especially if the grab 12, 13 is used to achieve compression pushing the tree trunks into the throat 30.

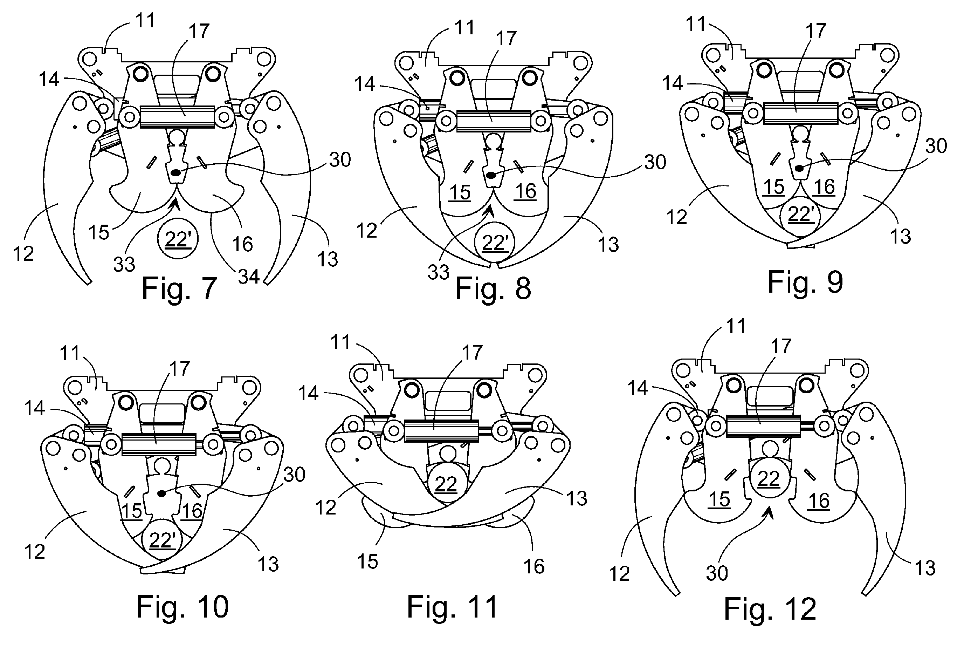

Next is a description of the operation in stages of the arrangement 10.1 shown in Figures 4a and 4b, with reference to Figures 7 - 12. Tree trunks 22, 22' can be collected into the holding throat 30 of the harvester device, for example, with the aid of the grab. In Figure 7, the open grab 12, 13 has been brought next to a standing tree 22', when the trunk 22' comes within the grab area of the grabs 12, 13. The operating device 17 can be used to keep the collector jaws 15, 16, which form the throat 30, against each other, so that the throat 30 can be in a closed position and pressure set by the cylinder 17 is maintained in it. It is also possible for a small gap relative to the thickness of the trunks 22' being collected to be permitted between the collector jaws 15, 16, which will assist the opening of the throat 30.

In Figure 8, the grab 12, 13 has been closed by the operating device 14, so that the trunk 22' has been embraced by it. Further, as the cylinder 14 reduces the grasp of the grab 12, 13, the trunk 22' is pressed against the feed side 33 formed by the jaws 15, 16 forming the throat 30, as shown in Figure 9. Because the curved shape of the feed side 33 of the throat 30 formed by the jaws 15, 16 leads smoothly into the throat 30, corresponding in this case to the circumference of a circle, the trunk 22' is led into the throat 30. This is also assisted by the symmetrical closing movement of the jaws 12, 13 relative to the throat 30 and by the adaptation of the curved shape of the feed side 33 of the throat 30 to the curved shape of the jaws 12, 13, as well as by the relative positioning of the throat 30 and the jaws 12, 13 to each other. The opposing loader jaws 12, 13 of the grab arrangement are arranged relative to each in such a way that, when the grab closes, they go on top of each other, so that they can be used to press the trunk 22' as far into the throat 30 as it will go. This is shown clearly in Figures 9 - 11 and 14 - 16.

When the grab 12, 13 is used to push the trunk 22' further against the throat 30, the throat 30 is forced open, as shown in Figure 10. In other words, the trunk 22' is gathered into the holding throat 30 by pushing it against the feed side 33 of the holding throat 30, in this case by the grab 15, 16, as a result of which the throat 30 opens and the trunk 22' is guided into the opening throat 30. In the throat 30, a compressive force that permits the trunks 22' to enter the holding throat 30 is maintained, which also holds the trunks 22' in the holding throat 30. In other words, it is possible to open the throat 30 by means of the force creating by the grab 12, 13, which is transmitted to the throat 30 through the trunk 22'.

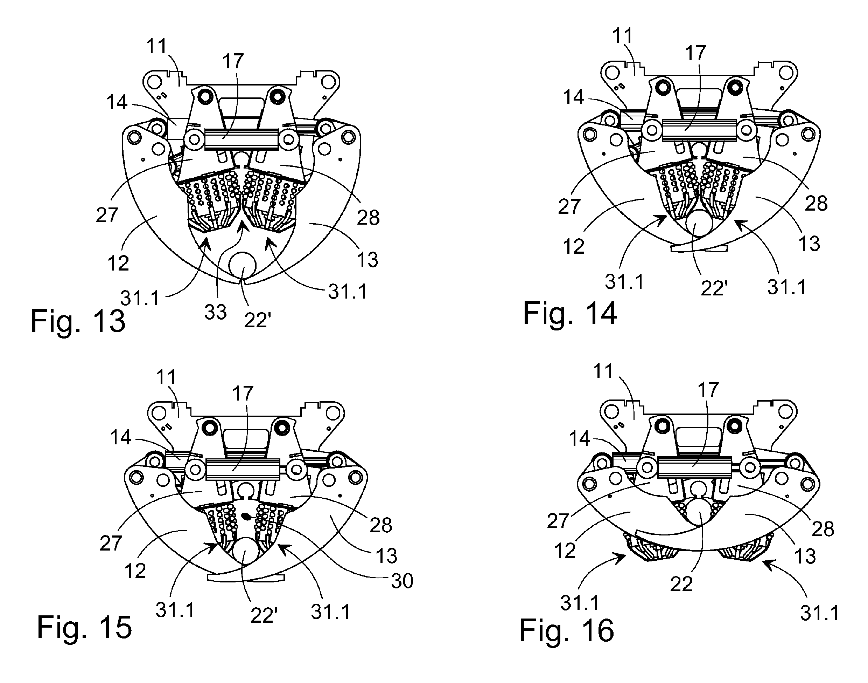

Once the loader jaws 12, 13 have pressed the tree 22 against the frame 11, the loader jaws 12, 13 can be opened for a new collecting movement, as shown in Figure 12. Because the a suitable compressive pressure is continuously directed to the cylinder 17 of the collector jaws 15, 16, it will continue to hold the trunk 22, even though the loader jaws 12, 13 are opened. Thus the collector jaws 15, 16 are used to keep hold of the already collected trees, so that the timber-handling grab can be moved next to the next tree that it is intended to gather into the throat 30. In other words, the arrangement then forms an energy-timber grab, when it can be used to collect several trees at a time, which accelerates work. Thus the work-machine operator can collect several trees into the grab, without needing to touch the control buttons of the collector throat 30, or without the control of the collector jaws 15, 16, or the collector rollers 31.1, 31.2 shown in figure 13 - 16 requiring a relatively cost-intensive computer.

Figures 13 - 16 show the operation in stages of the arrangement shown in Figures 6a and 6b, in which the throat 30 is formed by feed rollers 31.1. In principle, Figure 13 corresponds to the situational setting of Figure 7. In Figure 14, the trunk 22' is being pressed by the loader jaws 12, 13 against a curved shape leading towards the throat 30 arranged in the ends of the feed rollers 31.1. Once again, the pressure opens the throat 30 as shown by Figure 15 and the trunk 22 is gathered into the throat 30, as shown by Figure 16. After this the trunk 22 can be fed by the feed rollers 31.1, by pressing the tree 22 harder between them and rotating the rollers 31.1 by means of a hydraulic motor. Because the jaws 12, 13 possess a stripping blade, the tree 22 is stripped at the same time. There can also be a stripping blade in the bottom of the throat 30, in the frame 11. On the other hand, if it is wished to collect more trunks, the jaws 12, 13 are opened and operation continues from the situation according to Figure 13.

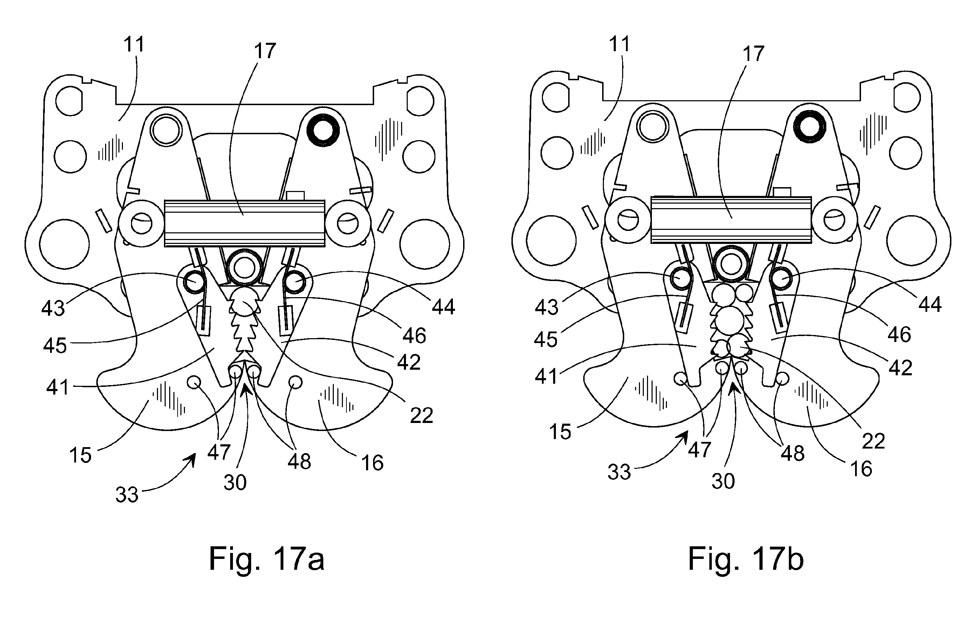

Figures 17a and 17b show a third embodiment of the arrangement. Now the collector jaws 15, 16 forming the throat 30 are equipped with a mechanism 41, 42 for adapting the size of the throat 30 to correspond to the trunks 22 collected in it. By means of the mechanism 41, 42, the size of the 'fork' of the collector jaws 15, 16 holding the trunks 22 in place can be adjusted to suit either a large or a small tree, more generally the timber load in the throat 30 at the time.

According to one embodiment, the mechanism includes additional jaws 41, 42 fitted rotatably to the collector jaws 15, 16. The additional jaws 41, 42 have attachment and rotation shafts 43 and 44. The throat 30 is arranged to be formed between these additional jaws 41, 42. In addition, loading elements 45, 46 are fitted to the additional jaws 41, 42. Torsion springs 45, 46 now act as such. They are arranged to permit the size of the throat 30 to be adapted to the trunks being collected, and, on the other hand, also to hold in the throat 30 the trunks 22 collected in the throat 30. At the feed side 33 ends of the collector jaws 15, 16 there are stops 47, 48 to limit the movement of the additional jaws 41, 42. When additional trees are gathered between the collector jaws 15, 16, the torsion springs 45, 46 of the additional jaws 41, 42 give way and more space enter the jaws 41, 42. This also ensures that the trees 22 remain in between the jaws. The construction is extremely simple and reliable in operation.

So that the trunks 22, 22' collected in the holding throat 30 can be compressed by the loader/stripping jaws 12, 13, in accordance with the embodiments described above, into the throat 30, the power ratio of the cylinder 14 of the loader/stripping jaws 12, 13 and the cylinder 17 of the holding-throat 30 elements 15, 16, 27, 28, 31.1, 31.2 can be arranged to be as set.

The power-ratio difference can be implemented, according to one embodiment, as a difference in hydraulic pressure. Thus, the hydraulic pressure of the cylinder 17 creating a compressive force in the throat jaws 15, 16, or the rollers 31.1, 31.2 is arranged to be less than the hydraulic pressure of the cylinder 14 of the jaws 12, 13. When the cylinder 14 of the loader jaws 12, 13 uses a relatively high hydraulic pressure to press a tree 22 against the elements 15, 16, 31.1, 31.2 forming the throat 30, the cylinder 17 of the holding elements 15, 16, 31.1, 31.2 gives way due to its relatively lower hydraulic pressure and opens the throat 30.

One example of a way to implement the difference in hydraulic pressure creating the compressive-force difference between the throat 30 and the grab arrangement 12, 13 is the use of pressure-reduction valves. According to one embodiment, the reduction valves can have fixed settings. Thus, their setting is not changed after being made and they are sure to operate as intended.

According to one exemplary embodiment, the work machine's pressure can be 170 - 280 bar. In that case, the pressure of the cylinder 17 of the throat jaws 15, 16 / rollers 31.1, 31.2 can be reduced by a pressure-reduction valve to, for example, 40 - 140 bar, more particularly to 50 - 100 bar, for example, to 75 bar. Correspondingly, the pressure of the loader-jaw 12, 13 cylinder 14 can be reduced by a pressure-reduction valve to 120 - 250 bar, more particularly to 140 - 200 bar, for example, to 170 bar. In general, the pressure of the operating-devices 17 of the throat 30 can be 20 - 80%, more particularly 35 - 60%, for example, 45% of the pressure of the operating devices 14 of the grab 12, 13.

According to a second embodiment, a suitable compressive-force ration can be implemented by means of the difference in power of the cylinders 14, 17. In that case, the smaller cylinder 17 (smaller cylinder diameter, i.e. effective surface area) will have less power than the larger cylinder 14. In general, the difference in power between the throat 30 and the grab arrangement 12, 13 can be achieved by means of a difference in effective surface area in the operating devices 17, 14.

As the hydraulic cylinder 17 of the throat jaws 15, 16 / rollers 31.1, 31.2 is smaller than the cylinder 14 of the loader jaws 12, 13, the smaller cylinder 17 will give way to the pressure of the large cylinder 14, even with the same hydraulic pressure in both. In one pilot device, a cylinder 17 with a diameter of 50 mm was used for the throat jaws 15, 16 / rollers 31.1, 31.2 while a cylinder 14 with a diameter of 70 mm was used for the loader jaws. The hydraulic-pressure difference and the effective-surface-area difference of the cylinders 14, 17 can be used together or separately, in order to achieve the desired power-ratio difference.

An arrangement 10.1, 10.2 with a principles like that described above can be applied in several different types of timber-harvesting devices to be attached to work machine, and thus also in several practical applications. The same applicability also applies to the feed roller 31.1, 31.2 equipped with a smooth end-guide construction 25, 32. In the timber harvester, there can also be a cutting device, for example, a guillotine, by means of which, for example, raw-material or energy timber can be cut and loaded in thinning felling.

It must be understood that the above description and the related figures are only intended to illustrate the present invention. The invention is thus in no way restricted to only the embodiments disclosed or stated in the Claims, but many different variations and adaptations of the invention, which are possible within the scope on the inventive idea defined in the accompanying Claims, will be obvious to one versed in the art.

## Claims

1. Arrangement for handling tree trunks, which includes a holding-element arrangement (15, 16, 31.1, 31.2), **characterized in that** the holding-element arrangement (15, 16, 31.1, 31.2) is arranged to form a functional throat (30), of which
- the feed side (33) is arranged to be smooth, in such a way that a tree trunk (22') pressed against it is arranged to be guided into the throat (30),
- the compressive force is arranged to permit the trunk (22') to enter the throat (30).

2. Arrangement according to Claim 1, which includes, in addition, a grab arrangement (12, 13), for taking a tree trunk (22, 22') into the throat (30), and in which the throat (30) and the grab arrangement (12, 13) are equipped with medium-operated operating-device means (17, 14), **characterized in that**
- the throat (30) and grab arrangement (12, 13) are arranged relative to each other in such a way that the trunks (22') are arranged to be pushed into the throat (30) by the grab arrangement (12, 13),
- the compressive force of the throat (30) is arranged to permit the trunks (22') to enter the throat (30) by means of the force created by the grab arrangement (12, 13).

3. Arrangement according to Claim 2, **characterized in that** the difference in compressive force between the throat (30) and the grab arrangement (12, 13) is arranged to be created by pressure-reduction-valve means.

4. Arrangement according to Claim 2 or 3, **characterized in that** the difference in compressive force between the throat (30) and the grab arrangement (12, 13) is arranged to be created by a difference in effective surface area between the operating-device means (17, 14).

5. Arrangement according to any of Claims 1 - 4, **characterized in that** the throat (30) is arranged to be formed of feed rollers (31.1, 31.2), the feed-side (33) end (34) of which is equipped with a smooth shaped structure (25, 32) guiding the trunks (22') towards the throat (30).

6. Arrangement according to Claim 5, **characterized in that** the shaped structure is a conical or spherical guide structure (25, 32) fitted to the end (34) of the feed rollers (31.1, 31.2).

7. Arrangement according to any of Claims 1 - 4, **characterized in that** the throat (30) is arranged to be formed of jaws (15, 16), the feed-side (33) end (34) of which is equipped with smoothly shaped structures for guiding the trunks (22') towards the throat (30).

8. Arrangement according to any of Claims 2 - 7, **characterized in that** the elements (15, 16) forming the throat (30) are pivoted rotatably to pivot points (20, 21) arranged in a frame structure (11) and the medium-operated operating-device means (17) are fitted between the throat (30) and the pivot points (20, 21).

9. Arrangement according to any of Claims 2 - 8, **characterized in that** the elements (12, 13) forming the grab arrangement are pivoted rotatably to pivot points (18, 19) arranged in the frame structure (11) and the medium-operated operating-device means (14) are fitted behind a pivot point (18, 19) relative to the grab.

10. Arrangement according to any of Claims 7 - 9, **characterized in that** the jaws (15, 16) forming the throat (30) are equipped with a mechanism (41, 42) for adapting the size of the throat (30) to correspond to the trunks (22) being collected in it.

11. Arrangement according to Claim 10, **characterized in that** the mechanism includes
- additional jaws (41, 42) fitted rotatably to the jaws (15, 16), between which the said throat (30) is arranged to be formed,
- loading elements (45, 46) fitted to the additional jaws (41, 42), which are arranged to permit the size of the throat (30) to adapt to the trunks (22) being collected and to hold in the throat (30) the trunks (22) collected in the throat (30).

12. Timber harvesting device to be attached to a work machine, **characterized in that** the timber harvesting device is equipped with an arrangement (10.1, 10.2) according to any of Claims 1 - 11.

13. Feed roller for an arrangement (10.1, 10.2) according to any of Claims 1 - 11, **characterized in that** the end (34) of the feed roller (31.1, 31.2) is equipped with a smoothly shaped structure (25, 32).

14. Method for handling tree trunks, in which the trunks (22, 22') are gathered into the holding-element arrangement (15, 16, 31.1, 31.2) of a harvesting device, preferably with the aid of a grab, **characterized in that** the holding-element arrangement (15, 16, 31.1, 31.2) forms functionally a holding throat (30) and
- the trunks (22') are gathered into the holding throat (30) by pushing them against the feed side (33) of the holding throat (30), as a result of which the trunks (22') are guided into the throat (30),
- in the throat (30), a compressive force is maintained, which permits the trunks (22') to enter the throat (30) and holds the trunks (22') in the holding throat (30).

15. Method according to Claim 14, **characterized in that** the trunks (22') are pushed into the holding throat (30) by means of a grab arrangement (12, 13).
